# EUROPÄISCHE PATENTSCHRIFT

(11) **EP 1 039 273 B1**
(45) Veröffentlichungstag und Bekanntmachung des Hinweises auf die Patenterteilung: **28.11.2007**
(21) Anmeldenummer: 00106249.6
(22) Anmeldetag: 22.03.2000
(51) Int. Cl.: G01F 23/284

(54) **Verfahren zur Füllstandsmessung**
Fluid level measurement method
Procédé de mesure du niveau d' un fluide

(30) Priorität: 24.03.1999 DE 19913307
(43) Veröffentlichungstag der Anmeldung: 27.09.2000
(73) Patentinhaber: SIEMENS AKTIENGESELLSCHAFT, 80333 München (DE)
(72) Erfinder: Ens, Wolfgang, 76187 Karlsruhe (DE); Schulmeister, Kurt, 76571 Gaggenau (DE)

(56) Entgegenhaltungen:
- DE-A- 4 308 373
- DE-A- 19 723 646

## Beschreibung

Bei der Füllstandsmessung nach dem Radar-Prinzip, wie sie beispielsweise aus der DE-A-4 308 373 bekannt ist, wird ein Mikrowellen- oder Ultraschallsignal senkrecht nach unten in einen Flüssigkeitsbehälter abgestrahlt und nach seiner Reflexion an der Flüssigkeitsoberfläche wieder empfangen. Aus der Laufzeit des empfangenen Signals auf seinem Weg von der Abstrahlung bis zur Flüssigkeitsoberfläche und zurück an den Empfangsort wird der Abstand zur Flüssigkeitsoberfläche und damit der Füllstand bestimmt. Die bekannte Füllstandsmessung arbeitet speziell nach dem Impuls-Echo-Prinzip, wobei das abgestrahlte Signal ein Impuls ist und von dem empfangenen hochfrequenten Signal die Hüllkurve als Meßsignal ausgewertet wird.

Ein aus der US-A-5 799 534 bekanntes Verfahren zur Füllstandsmessung arbeitet speziell nach dem FMCW (Frequency Modulated Continuous Wave)-Prinzip, wobei das abzustrahlende Signal linear frequenzmoduliert wird. Aufgrund der Laufzeit des empfangenen Signals und der zwischenzeitlich durch die lineare Frequenzmodulation erfolgten Frequenzänderung des abzustrahlenden Signals ergibt sich eine Differenz zwischen den Frequenzen beider Signale, die proportional zum Abstand der Flüssigkeitsoberfläche ist. Durch Mischen des empfangenen Signals mit dem abzustrahlenden Signal wird ein Meßsignal erzeugt, dessen Frequenz dieser Differenz und damit dem Füllstand entspricht.

Neben der ersten Reflexion des abgestrahlten Signals an der Flüssigkeitsoberfläche treten weitere Reflexionen auf, die in dem Meßsignal in Form von zusätzlichen Mehrfachechos zu dem eigentlichen Füllstandsecho erscheinen. Darüber hinaus können Störechos aufgrund von Reflexionen an der Sende-/Empfangsantenne, der Behälterwand, an Einbauten im Behälter oder an Anbackungen an der Behälterwand auftreten. Aus der DE-A-4 308 373 ist ein Verfahren zum Ausblenden solcher Mehrfach- und Störechos aus dem Meßsignal bekannt.

Im Rahmen einer Meßsignalverfolgung bei leer laufendem Behälter läßt sich der Leerzustand des Behälters auch dann detektieren, wenn der Behälterboden uneben ist und daher keine oder nur geringe Reflexionen des Signals in Richtung zum Empfangsort stattfinden. Die Meßsignalverfolgung ist jedoch nicht immer möglich und kann darüber hinaus beispielsweise beim Nachfüllen des Behälters oder Umrühren der Flüssigkeit gestört werden.

Aus DE 197 23 646 ist ein Verfahren zur Messung des Füllstands in einem Behälter mit gekrümmtem Behälterboden nach dem Radarprinzip bekannt, bei welchem der Leerzustand des Behälters durch Auswerten von speziellen Echos bestimmt wird.

Der Erfindung liegt daher die Aufgabe zugrunde, bei Behältern mit unebenem, insbesondere gewölbtem Boden den Leerzustand des Behälters allein aus dem Meßsignal ohne vorherige Meßsignalverfolgung zu detektieren.

Gemäß der Erfindung wird die Aufgabe durch das in Anspruch 1 angegebene Verfahren gelöst.

Vorteilhafte Weiterbildungen des erfindungsgemäßen Verfahrens sind in den Unteransprüchen angegeben.

Der Erfindung liegt die Erkenntnis zugrunde, daß das Meßsignal bei vollständig leerem Behälter mit unebenem Boden durch das Systemrauschen und Reflexionen von Nebenkeulen der Signalabstrahlung bestimmt ist. Das Meßsignal wird daher während der Füllstandsmessung auf typisches Rauschsignalverhalten hin untersucht, wobei der Leerzustand des Behälters dann detektiert wird, wenn das Rauschsignalverhalten vorliegt. Erfolgt die Füllstandsmessung nach dem Impuls-Echo-Prinzip, so wird vorzugsweise die Hüllkurve des dabei empfangenen Signals als Meßsignal herangezogen und ausgewertet. Bei nach dem FMCW-Prinzip arbeitender Füllstandsmessung wird das Meßsignal vorzugsweise in seinem Frequenzspektrum untersucht, wozu es einer Spektralanalyse, beispielsweise durch FFT (Fast-Fourier-Transformation), unterzogen wird.

Um den Leerzustand des Behälters mit hinreichender Genauigkeit detektieren zu können, werden aus dem Meßsignal in vorteilhafter Weise mindestens zwei unterschiedliche Rauschsignalcharakteristika wertemäßig ermittelt, aus denen ein Wahrscheinlichkeitswert für das Vorliegen des Rauschsignalverhaltens ermittelt wird. Die Ermittlung des Wahrscheinlichkeitswertes kann dabei durch eine Fuzzy-Verknüpfung der Rauschsignalcharakteristika erfolgen.

Eine bevorzugte Methode zur Untersuchung des Meßsignals auf Rauschsignalverhalten besteht darin, daß das Meßsignal gefiltert wird und daß ein dem Frequenzgang des Filters ähnliches Frequenzspektrum des gefilterten Meßsignals als Rauschsignalcharakteristikum gewertet wird. Bei der Filterung kann es sich beispielsweise um eine Hochpaßfilterung, speziell um eine Differenzierung handeln, um den Einfluß von Signaldämpfungen im Frequenzspektrum des Meßsignals auszugleichen. Weist das Meßsignal Rauschsignalverhalten auf, so ist der Frequenzgang des Filters in dem gefilterten Meßsignal erkennbar. Bei einer Hochpaßfilterung des Meßsignals läßt sich das Vorliegen eines Rauschverhaltens dadurch feststellen, daß die Amplituden der lokalen Maxima und/oder Minima des Frequenzspektrums des gefilterten Meßsignals zumindest im Mittel mit steigender Frequenz zunehmend höhere Werte aufweisen. Umgekehrt weisen die bei gefülltem Behälter durch Reflexionen an der Flüssigkeitsoberfläche erzeugten lokalen Maxima bzw. Minima, also die Mehrfachechos, mit steigender Frequenz zunehmend kleinere Werte auf.

Eine ergänzende oder alternative Methode zur Untersuchung des Meßsignals auf Rauschsignalverhalten besteht in der Detektion von sprunghaften, d. h. zufälligen, Änderungen der Frequenz und/oder Amplitude eines, insbesondere des größten, lokalen Maximums des Frequenzspektrums.

Um bei der Untersuchung des Meßsignals auf typisches Rauschsignalverhalten, insbesondere bei der Auswertung seines Frequenzspektrums, systematische Fehler zu verhindern, werden vorzugsweise Signalanteile ausgeblendet, die von Reflexionen an Störobjekten herrühren und zuvor in einem Lernprozeß ermittelt wurden. Die Ermittlung derartiger Störechos ist beispielsweise aus der eingangs bereits erwähnten DE-A-4 308 373 bekannt.

Zur weiteren Erläuterung der Erfindung wird im folgenden auf die Figuren der Zeichnung Bezug genommen; im einzelnen zeigen:
- Figur 1: ein Beispiel für eine Füllstandsmeßeinrichtung in Form eines vereinfachten Blockschaltbildes,
- Figur 2: ein Beispiel für das Frequenzspektrum des Meßsignals bei gefülltem Behälter,
- Figur 3: ein Beispiel für das Frequenzspektrum des Meßsignals bei leerem Behälter,
- Figur 4: ein Beispiel für die Meßsignalauswertung in der in Figur 1 gezeigten Füllstandsmeßeinrichtung und
- Figur 5: ein Beispiel für die Verknüpfung unterschiedlicher Rauschsignalcharakteristika.

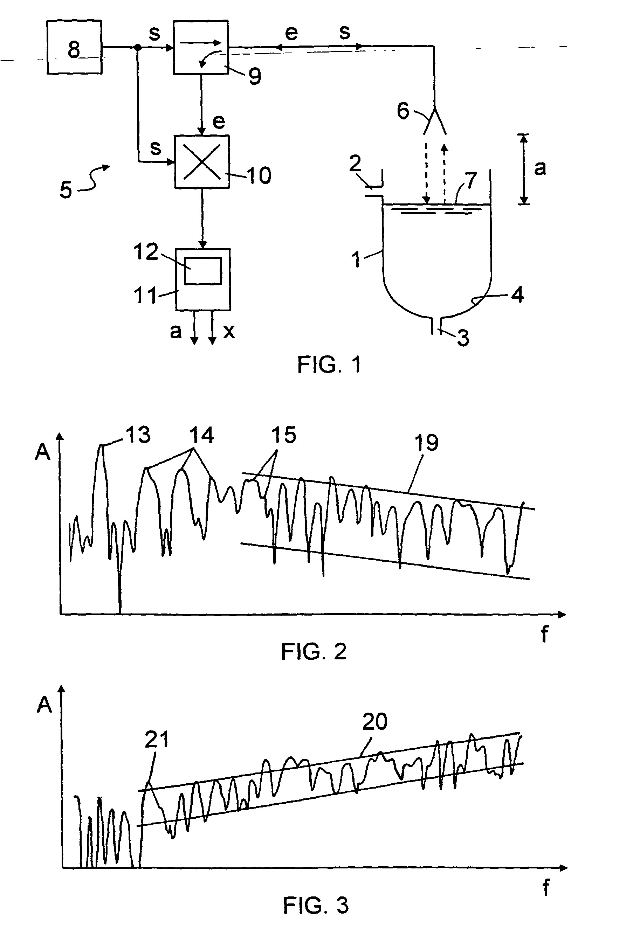

Figur 1 zeigt einen Flüssigkeitsbehälter 1 mit einem Flüssigkeitszu- und -ablauf 2 und 3 und einem hier nach außen gewölbten Boden 4. Zur Füllstandsmessung dient eine nach dem FMCW-Prinzip arbeitende Füllstandsmeßeinrichtung 5, die über eine Antenne 6 ein linear frequenzmoduliertes Mikrowellensignal s senkrecht nach unten in den Behälter 1 abstrahlt und das bei gefülltem Behälter 1 an der Flüssigkeitsoberfläche 7 zurückreflektierte Signal e empfängt. Das abzustrahlende Signal s wird in einer Signalquelle 8 erzeugt und über eine Sende-/Empfangsweiche 9 der Antenne 6 zugeführt. Das von der Antenne 6 empfangene Signal e wird über die Sende-/Empfangsweiche 9 einem Demodulator 10 zugeführt, wo es mit dem abzustrahlenden Signal s zu einem Meßsignal m gemischt wird.

Die Frequenz des Meßsignals m entspricht der Differenz der Frequenzen der Signale s und e und ist zum Abstand a zwischen der Antenne 6 und der Flüssigkeitsoberfläche 7 proportional. In einer Meßsignalauswerteeinrichtung 11 wird der Abstand a und damit der Füllstand ermittelt.

Figur 2 zeigt das typische Frequenzspektrum (Amplitude A über der Frequenz f) des Meßsignals m bei flüssigkeitsgefülltem Behälter 1. Das Meßsignal m wurde zuvor in einem Filter 12 der Meßsignalauswerteeinrichtung 11 differenziert, um Signaldämpfungen auszugleichen. Das Frequenzspektrum enthält neben dem durch die erstmalige unmittelbare Reflexion des Signals s an der Flüssigkeitsoberfläche 7 erzeugten lokalen Maximum 13 des eigentlichen Füllstandsechos eine Vielzahl weiterer lokaler Maxima 14 mit regelmäßigem Auftreten, die von Mehrfachechos hervorgerufen werden, sowie viele von Störechos hervorgerufene Maxima 15 mit unregelmäßigem Auftreten. Die Maxima des Füllstandsechos und der Mehrfachechos weisen höhere Amplitudenwerte auf als die der Störechos, wobei die Amplitudenhöhe aufgrund längerer Signalwege generell mit zunehmender Frequenz abnimmt.

Figur 3 zeigt das typische Frequenzspektrum des Meßsignals m bei völlig entleertem Behälter 1, wobei auch hier das Meßsignal m zuvor differenziert worden ist. Da das abgesandte Signal s aufgrund der Wölbung des Behälterbodens 4 nicht direkt zur Antenne 6 zurückreflektiert wird, ergibt sich ein Meßsignal m, das durch Systemrauschen und Reflexionen von Nebenkeulen der Signalabstrahlung bedingt ist. Aufgrund des Rauschsignalverhaltens des Meßsignals m ist in seinem Frequenzspektrum der Frequenzgang des Filters 12 erkennbar, was sich darin zeigt, daß die Amplituden der lokalen Maxima und Minima mit steigender Frequenz zunehmend höhere Werte aufweisen. Ein weiteres Charakteristikum für das Rauschsignalverhalten des Meßsignals m besteht in sprunghaften zufälligen Änderungen der lokalen Maxima.

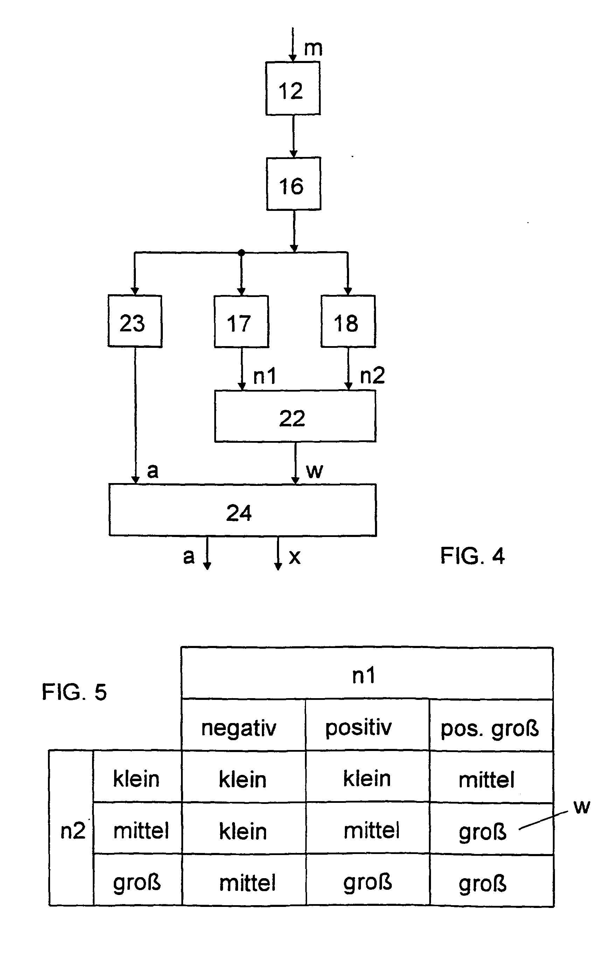

Figur 4 zeigt ein Beispiel für die Auswertung des Meßsignals m in der Signalauswerteeinrichtung 11. Wie bereits erwähnt, wird das Meßsignal m in dem Filter 12 zunächst einer Differenzierung und anschließend in einem Spektralanalysator 16 einer Fast-Fourier-Transformation unterzogen. Für das dabei erhaltene Frequenzspektrum werden in zwei Merkmalsanalysatoren 17 und 18 die beiden oben genannten Rauschsignalcharakteristika n1 und n2 wertemäßig bestimmt.

Dazu wird in dem Merkmalsanalysator 17 die Amplitudenverteilung der lokalen Maxima und/oder der lokalen Minima durch die Steigung einer Geraden 19, 20 (vgl. Figuren 2 und 3) mit minimalem quadratischen Fehler (Least Square Fit) durch die Maxima bzw. Minima ermittelt. Eine weitere Möglichkeit ist z. B. die Addition der Einzelsteigungen der Geradenstücke zwischen aufeinanderfolgenden Maxima bzw. Minima. Der Wert dieser ermittelten Geradensteigung dient als Rauschsignalcharakteristikum n1 und ist im Falle des gefüllten Behälters 1 in Richtung zunehmender Frequenz f negativ, im Falle des völlig leeren Behälters 1 positiv. Bei der Berechnung der Geradensteigung werden die von Störechos hervorgerufenen lokalen Maxima 15 außer acht gelassen.

In dem zweiten Merkmalsanalysator 18 werden durch Verfolgung eines, hier des größten, Maximums 13, 21 im Frequenzspektrum des Meßsignals m die Weite und Häufigkeit der Amplituden- und/oder Frequenzsprünge des betreffenden Maximums 13, 21 als weiteres Rauschsignalcharakteristikum n2 bestimmt. Je größer die Sprungweite und -häufigkeit ist, um so größer ist die Wahrscheinlichkeit, daß das Meßsignal m Rauschsignalverhalten aufweist.

Die Rauschsignalcharakteristika n1 und n2 werden in einer Fuzzy-Logik 22 nach der in Figur 5 angegebenen Regel zu einem Wahrscheinlichkeitswert w für das Vorliegen des Rauschsignalverhaltens bei dem Meßsignal m verknüpft. Dieser Wahrscheinlichkeitswert w wird zusammen mit dem in einer Recheneinrichtung 23 aus dem Meßsignal m ermittelten Abstand bzw. Füllstand a einer Bewertungseinrichtung 24 zugeführt, die den Wahrscheinlichkeitswert w mit einer Schwelle vergleicht und beim Unterschreiten der Schwelle den Füllstand a und beim Überschreiten der Schwelle eine Meldung x für den Leerzustand des Behälters 1 abgibt.

## Patentansprüche

1. Verfahren zur Füllstandsmessung nach dem Radar-Prinzip, wobei zur Messung in Flüssigkeitsbehältern (1) mit unebenem Boden (4) das erhaltene Meßsignal (m) auf typisches Rauschsignalverhalten hin untersucht wird und bei Vorliegen des Rauschsignalverhaltens der Leerzustand des Behälters (1) detektiert wird.

2. Verfahren nach Anspruch 1, **dadurch gekennzeichnet, daß** bei dem nach dem Impuls-Echo-Prinzip arbeitenden Verfahren die Hüllkurve des empfangenen Signals als Meßsignal herangezogen und untersucht wird.

3. Verfahren nach Anspruch 1, **dadurch gekennzeichnet, daß** bei dem nach dem FMCW-Prinzip arbeitenden Verfahren das Meßsignal (m) in seinem Frequenzspektrum untersucht wird.

4. Verfahren nach einem der vorangehenden Ansprüche, **dadurch gekennzeichnet, daß** aus dem Meßsignal (m) mindestens zwei unterschiedliche Rauschsignalcharakteristika (n1, n2) wertemäßig bestimmt werden, aus denen ein Wahrscheinlichkeitswert (w) für das Vorliegen des Rauschsignalverhaltens ermittelt wird.

5. Verfahren nach Anspruch 4, **dadurch gekennzeichnet, daß** der Wahrscheinlichkeitswert (w) für das Vorliegen des Rauschsignalverhaltens durch eine Fuzzy-Verknüpfung der wertemäßig bestimmten Rauschsignalcharakteristika (n1, n2) ermittelt wird.

6. Verfahren nach einem der vorangehenden Ansprüche, **dadurch gekennzeichnet, daß** das Meßsignal (m) gefiltert wird und daß ein dem Frequenzgang des Filters (12) ähnliches Frequenzspektrum des gefilterten Meßsignals (m) als Rauschsignalcharakteristikum (n1) gewertet wird.

7. Verfahren nach Anspruch 6, **dadurch gekennzeichnet, daß** das Meßsignal (m) hochpaßgefiltert, insbesondere differenziert wird und daß die Amplituden der lokalen Maxima (13, 14, 15, 21) und/oder Minima des Frequenzspektrums daraufhin untersucht werden, daß sie zumindest im Mittel mit steigender Frequenz (f) zunehmend höhere Werte aufweisen.

8. Verfahren nach einem der vorangehenden Ansprüche, **dadurch gekennzeichnet, daß** sprunghafte Änderungen der Frequenz und/oder Amplitude eines, insbesondere des größten, lokalen Maximums (21) des Frequenzspektrums als Rauschsignalcharakteristikum (n2) gewertet werden.

9. Verfahren nach einem der vorangehenden Ansprüche, **dadurch gekennzeichnet, daß** bei der Untersuchung des Meßsignals (m) auf typisches Rauschsignalverhalten von Reflexionen an Störobjekten herrührende Signalanteile, die zuvor in einem Lernprozeß ermittelt wurden, ausgeblendet werden.

## Claims

1. Method of level measurement according to the radar principle, wherein for measurement in liquid containers (1) with a uneven floor (4), the obtained measurement signal (m) is investigated for typical noise signal behaviour, and if noise signal behaviour is present, the empty state of the container (1) is detected.

2. Method according to Claim 1, **characterized in that** in the method, which works on the pulse-echo principle, the envelope curve of the received signal is used and investigated as the measurement signal.

3. Method according to Claim 1, **characterized in that** in the method, which works on the FMCW principle, the measurement signal (m) is investigated in its frequency spectrum.

4. Method according to one of the preceding claims, **characterized in that** from the measurement signal (m), at least two different noise signal characteristics (n1, n2) are determined by value, and a probability value (w) for the presence of noise signal behaviour is determined from them.

5. Method according to Claim 4, **characterized in that** the probability value (w) for the presence of noise signal behaviour is determined by a fuzzy logical operation on the noise signal characteristics (n1, n2), which are determined by value.

6. Method according to one of the preceding claims, **characterized in that** the measurement signal (m) is filtered, and a filtered measurement signal (m) frequency spectrum which is similar to the frequency response of the filter (12) is evaluated as a noise signal characteristic (n1) .

7. Method according to Claim 6, **characterized in that** the measurement signal (m) is high pass filtered, in particular differentiated, and that the amplitudes of the local maxima (13, 14, 15, 21) and/or minima of the frequency spectrum are investigated for having, at least on average, increasingly higher values with increasing frequency (f).

8. Method according to one of the preceding claims, **characterized in that** abrupt changes of the frequency and/or amplitude of a local maximum (21), particularly the greatest, of the frequency spectrum are evaluated as a noise signal characteristic (n2).

9. Method according to one of the preceding claims, **characterized in that** in the investigation of the measurement signal (m) for typical noise signal behaviour, signal portions which are derived from reflections on interference objects, and were determined previously in a learning process, are masked out.

## Revendications

1. Procédé de mesure de niveau selon le principe du radar, le signal de mesure (m) obtenu étant, pour la mesure dans des réservoirs de liquide (1) à fond non plan, étudié quant au comportement signal-bruit typique, et l'état vide du réservoir (1) étant détecté en cas de présence du comportement signal-bruit.

2. Procédé selon la revendication 1, **caractérisé en ce que**, dans le cas du procédé fonctionnant selon le principe impulsion - écho, on tire parti de l'enveloppante du signal reçu comme signal de mesure et on l'étudie.

3. Procédé selon la revendication 1, **caractérisé en ce que**, dans le cas du procédé fonctionnant selon le principe de l'onde continue à fréquence modulée, on étudie le spectre de fréquences du signal de mesure (m).

4. Procédé selon l'une des revendications précédentes, **caractérisé en ce que**, à partir du signal de mesure (m), on définit au moins deux caractéristiques de signal bruit différentes (n1, n2) par leur valeur, à partir desquelles on détermine une valeur de probabilité (w) de la présence du comportement signal-bruit.

5. Procédé selon la revendication 4, **caractérisé en ce que** l'on détermine la valeur de probabilité (w) de la présence du comportement signal-bruit par un chaînage flou des caractéristiques de signal de bruit (n1, n2) définies en valeur.

6. Procédé selon l'une des revendications précédentes, **caractérisé en ce que** l'on filtre le signal de mesure (m), et on exploite un spectre de fréquences du signal de mesure (m) filtré similaire à la réponse en fréquences du filtre (12) en tant que caractéristique de signal bruit (n1).

7. Procédé selon la revendication 6, **caractérisé en ce que** l'on filtre le signal de mesure (m) dans un filtre passe-haut, en particulier différencié, et **en ce que** l'on étudie les amplitudes des maxima locaux (13, 14, 15, 21) et/ou des minima du spectre de fréquences pour vérifier qu'elles présentent des valeurs de plus en plus grandes, au moins en moyenne, quand la fréquence (f) s'élève.

8. Procédé selon une des revendications précédentes, **caractérisé en ce que** l'on exploite des variations brusques de la fréquence et/ou de l'amplitude d'un maximum (21) local, en particulier du plus grand, du spectre de fréquences en tant que caractéristique de signal bruit (n2).

9. Procédé selon une des revendications précédentes, **caractérisé en ce que**, lors de l'étude du comportement de signal de bruit typique du signal de mesure (m), on occulte des composantes de signaux provenant de réflexions sur des objets perturbateurs et qui ont été déterminées auparavant dans un processus d'apprentissage.
